# EUROPEAN PATENT APPLICATION

(11) **EP 2 960 536 A1**
(43) Date of publication of application: **30.12.2015**
(21) Application number: 14754121.3
(22) Date of filing: 18.02.2014
(51) Int. Cl.: F16D 3/68, F16D 3/12

(54) **COUPLING**

(30) Priority: 22.02.2013 JP 2013033002
(71) Applicant: Nabeya Bi-Tech Kabushiki Kaisha, Seki-shi, Gifu 501-3939 (JP)
(72) Inventor: KANEDA, Mitsuo, Seki-shi, Gifu 501-3939 (JP)
(74) Representative: Lind, Urban Arvid Oskar
(86) International application number: PCT/JP2014/053720
(87) International publication number: WO 2014/129441

(57) **Abstract**

A coupling comprises: a pair of hubs including a first hub and a second hub, each having an inner end surface and a plurality of claws located on the inner end surface at intervals in a circumferential direction and projecting in an axial direction of the hub, the inner end surfaces of the first and second hubs being opposed to each other, each of the claws of the first hub being located in the gap between two adjacent claws of the second hub and each of the claws of the second hub being located in the gap between two adjacent claws of the first hub; and a rubber spacer located between the opposed inner end surfaces. A product of a damping ratio and a square root of a dynamic torsional spring constant of the coupling is 1.3 to 12.0.

## Description

### TECHNICAL FIELD

The present invention relates to a coupling for a servomotor that increases the speed control gain to improve the responsiveness and shortens the settling time.

### BACKGROUND ART

A servomotor transmits torque from a driving-side rotation shaft to a driven-side rotation shaft through a coupling. The coupling includes a pair of hubs and a rubber spacer located between the pair of hubs. Silicone rubber, urethane rubber, chloroprene rubber, styrene-butadiene-copolymer rubber (SBR), or the like is used to form the rubber spacer. The rubber spacer needs to have a certain rigidity to limit the oscillation amplitude and improve the torque transmission performance.

Non-patent document 1 discloses a solution for such servomotors. More specifically, to avoid resonance, the resonance angular frequency needs to be increased to be separated from an input angular frequency. However, this results in the need to at least increase the torsional rigidity of a shaft joint, which represents the mechanical system. When there is a resonance relationship resulting from a low torsional rigidity, the control gain of the control system, particularly, that of the servomotor, needs to be decreased to a level in which the resonance does not occur. Alternatively, a selective band-pass filter needs to be used to remove the resonance.

For example, to increase the natural frequency, the rigidity of a shaft joint may be increased. This enlarges the shaft joint and increases the moment of inertia. However, in a high-speed and high-response precision positioning mechanism, the use of a shaft joint having such a large moment of inertia affects the acceleration time, the deceleration time, and stopping accuracy. Thus, it is difficult to control the positing mechanism. Additionally, the shaft joint having a large moment of inertia would require the use of a motor having a capacity larger than that intended for the original task of the motor. Thus, there is a limitation to the size of the shaft joint that may be used.

### PRIOR ART DOCUMENT

### NON-PATENT DOCUMENT

Non-Patent Document 1: "Next-Generation Precision Positioning Technology", Published by Fuji Technosystem, April 25, 2000, pp. 359-361.

### SUMMARY OF THE INVENTION

### PROBLEMS THAT ARE TO BE SOLVED BY THE INVENTION

As described in non-patent document 1, there is a limit to the improvement in the responsiveness when increasing the speed control gain of a servomotor only by increasing the torsional rigidity of a coupling, which functions as the shaft joint. However, non-patent document 1 does not suggest properties related to the speed control gain and the responsiveness other than the torsional rigidity of the coupling.

It is an object of the present invention to provide a coupling that increases the speed control gain and shortens the settling time.

### MEANS FOR SOLVING THE PROBLEM

To achieve the above object, one aspect of the present invention provides a coupling comprising:
a pair of hubs including a first hub and a second hub, wherein
   the first hub includes a first inner end surface and a plurality of first claws located on the first inner end surface at intervals in a circumferential direction and projecting in an axial direction of the first hub,
   adjacent ones of the plurality of first claws each form a first gap therebetween,
   the second hub includes a second inner end surface and a plurality of second claws located on the second inner end surface at intervals in a circumferential direction and projecting in an axial direction of the second hub,
   adjacent ones of the plurality of second claws each form a second gap therebetween,
   the first inner end surface and the second inner end surface are opposed to each other,
   each of the first claws is located in the second gap and each of the second claws is located in the first gap; and
a rubber spacer located between the first inner end surface and the second inner end surface,
wherein a product of a damping ratio ζ and a square root K^{1/2} of a dynamic torsional spring constant K of the coupling is 1.3 to 12.0.

In the coupling, it is preferred that the rubber spacer be formed from a rubber material having a loss tangent (tan δ) of 0.2 to 1.3.

In the coupling, it is preferred that, in a cross-section orthogonal to the axis of the pair of hubs, a cross-sectional area of the rubber spacer between an inner circumference and an outer circumference of the first claws and the second claws be 20% to 50% of a combined cross-sectional area of the first claws, the second claws, and the rubber spacer between the inner circumference and the outer circumference of the first claws and the second claws.

In the coupling, it is preferred that the damping ratio ζ be 0.07 to 0.27.

In the coupling, it is preferred that the square root K^{1/2} of the dynamic torsional spring constant K be 12.2 to 58.3.

### EFFECTS OF THE INVENTION

The relationship between the damping ratio ζ and the square root K^{1/2} of the dynamic torsional spring constant K is expressed by a damping curve. When the square root K^{1/2} of the dynamic torsional spring constant K decreases, the damping ratio ζ increases. When the square root K^{1/2} of the dynamic torsional spring constant K increases, the damping ratio ζ decreases. The speed control gain, which indicates the responsiveness of a coupling, increases as the damping ratio ζ and the square root K^{1/2} of the dynamic torsional spring constant K increases. In the coupling of the present invention, the product of the damping ratio ζ and the square root K^{1/2} of the dynamic torsional spring constant K is 1.3 to 12.0. Thus, the damping ratio ζ and the square root K^{1/2} of the dynamic torsional spring constant K may each be increased. This contributes to an improvement of the gain.

Additionally, an increase in the damping ratio ζ of the coupling increases the damping properties. An increase in the square root K^{1/2} of the dynamic torsional spring constant K increases the rigidity. This reduces a delay of the torque transmission.

Therefore, the coupling of the present invention has the advantages of increasing the speed control gain and shortening the settling time.

### BRIEF DESCRIPTION OF THE DRAWINGS

Fig. 1 is a perspective view of a first embodiment of a coupling according to the present invention.
Fig. 2 is a cross-sectional view of the coupling of the first embodiment taken through a rubber spacer of the coupling.
Fig. 3 is an exploded perspective view of the coupling of the first embodiment.
Fig. 4 is a graph showing the relationship between the square root K^{1/2} of a dynamic torsional spring constant K and a damping ratio ζ.
Fig. 5 is an exploded perspective view of a second embodiment of a coupling.
Fig. 6 is a cross-sectional view of the coupling of the second embodiment taken through a rubber spacer of the coupling.

### EMBODIMENTS OF THE INVENTION

### First Embodiment

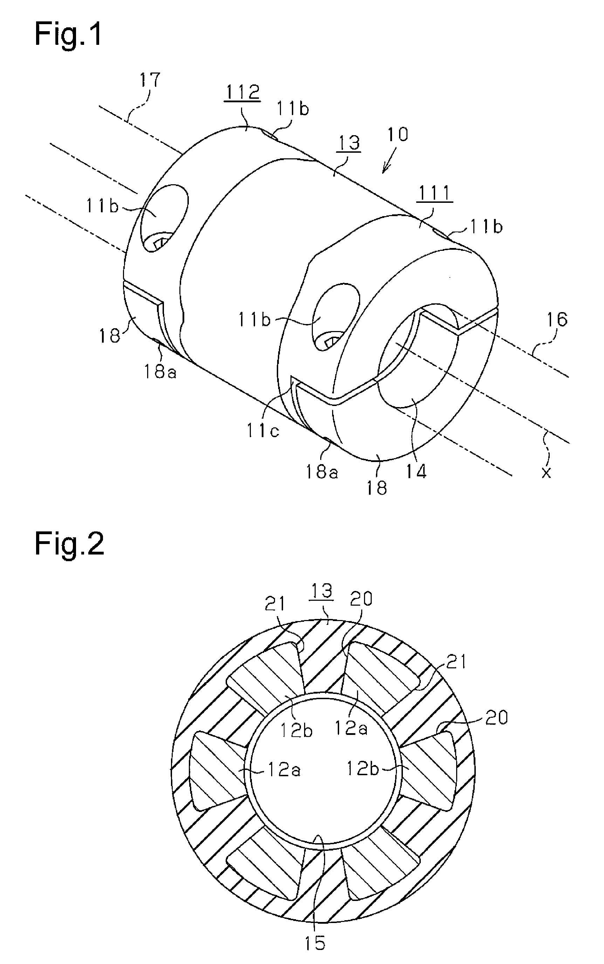

A first embodiment of the present invention will now be described in detail with reference to Figs. 1 to 4.

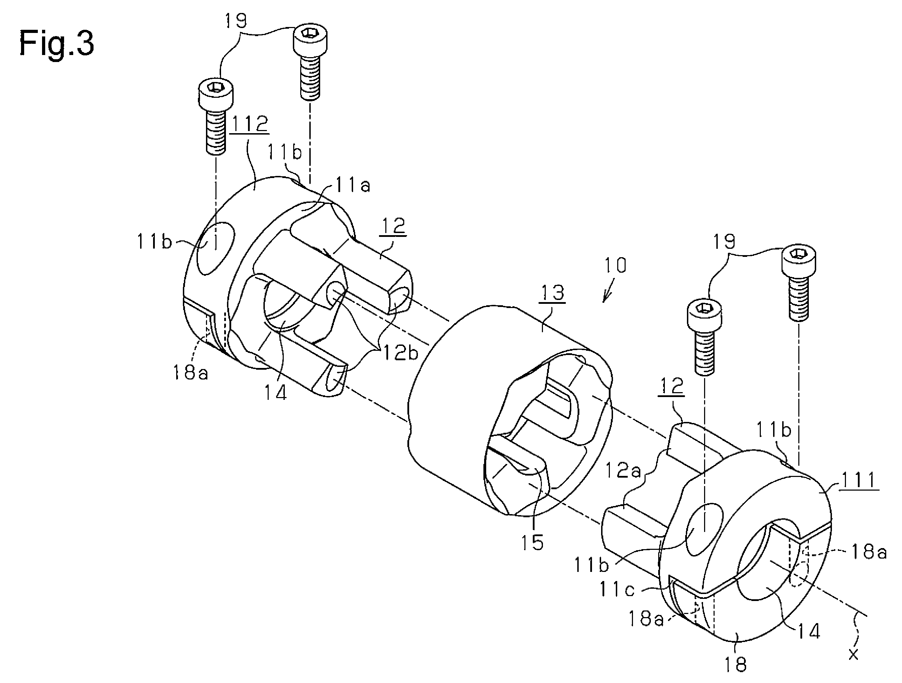

As shown in Fig. 3, the first embodiment of a coupling 10 includes a pair of tubular hubs, namely, a first hub 111 and a second hub 112. The first hub 111 and the second hub 112 each include an inner end surface 11 a. The inner end surfaces 11a are opposed to each other. Each inner end surface 11a includes three coupling claws 12 arranged at equal intervals in the circumferential direction. The claws 12 project in the direction of the axis x of the first hub 111 and the second hub 112. The coupling 10 includes a rubber spacer 13, which is arranged between the first hub 111 and the second hub 112. The first hub 111 and the second hub 112 each include an insertion hole 14 extending through the center of the hub in the direction of the axis x. The rubber spacer 13 includes a through hole 15 that communicates with the insertion holes 14 of the first hub 111 and the second hub 112.

As shown in Fig. 1, the coupling 10 is configured in such a manner that a driving side rotation shaft 16 of a servomotor or the like is inserted into one of the insertion holes 14 of the first hub 111 and the second hub 112, and a driven side rotation shaft 17 is inserted into the other insertion hole 14 and connected to the driving side rotation shaft 16.

The first hub 111 and the second hub 112 are formed from metal, such as, aluminum (aluminum alloy), cast iron, steel material (stainless steel), or copper alloy. The rubber spacer is formed from a rubber material, such as, fluorine-based rubber, hydrogenated acrylonitrile-butadiene-copolymer rubber (HNBR), natural rubber (NR), styrene-butadiene-copolymer rubber (SBR), chloroprene rubber (CR), urethane rubber (U), or silicone rubber (Q). Fluorine-based rubber is preferred to other rubber materials from the viewpoint of hardness, damping properties, and the like. One example of a fluorine-based rubber is vinylidene fluoride-based rubber (FKM).

It is preferred that the loss tangent tan δ of the rubber material be 0.2 to 1.3. Further preferably, the loss tangent tan δ of the rubber material is 0.2 to 0.7. The loss tangent tan δ is a ratio of loss shear elastic modulus to storage shear elastic modulus. The loss tangent tan δ shows the energy level absorbed by a rubber material when the rubber material is deformed, that is, a heat conversion level. When the loss tangent tan δ is in the above range, the damping ratio ζ and the rigidity of the coupling 10 are increased with further ease.

It is preferred that the damping ratio ζ of the coupling 10 be 0.07 to 0.27. The damping ratio ζ is a coefficient showing the damping properties and calculated from a constant logarithmic decrement obtained from the logarithm of the ratio of adjacent amplitudes in a damping free oscillation waveform where the amplitudes are exponentially damped. When the damping ratio ζ is in the above range, the oscillation amplitude and the rigidity of the coupling 10 may be set to desired values.

The first hub 111 and the second hub 112 each include an outer end surface that is cut into to be semi-tubular and define a cutaway portion 11c. Each cutaway portion 11c receives a fastening member 18. The first hub 111 and the second hub 112 each include two through holes 11b extending in a direction orthogonal to the axis x. Each fastening member 18 includes two screw holes 18a.

As shown in Figs. 1 and 3, when the driving-side rotation shaft 16 is inserted into the insertion hole 14 of the first hub 111 and the driven-side rotation shaft 17 is inserted into the insertion hole 14 of the second hub 112, two hexagonal socket head bolts 19 are inserted into the through holes 11b of each of the first hub 111 and the second hub 112. Then, the hexagonal socket head bolts 19 are each engaged with and fastened to one of the screw holes 18a of the fastening member 18 with a hex key (not shown). In this manner, the coupling 10 couples the driving-side rotation shaft 16 and the driven-side rotation shaft 17. In this situation, torque is transmitted from the driving-side rotation shaft 16 to the driven-side rotation shaft 17 through the coupling 10.

The coupling 10 is manufactured as follows. First, the first hub 111 and the second hub 112 are opposed to each other and placed in a mold. Here, the first claws 12a of the first hub 111 are each positioned in a gap 20 between two adjacent second claws 12b of the second hub 112 so that the first claws 12a and the second claws 12b are located at equal intervals in the circumferential direction. An insert is also arranged at locations corresponding to the through hole 15 of the rubber spacer 13 and the insertion holes 14 of the first hub 111 and the second hub 112. The mold is then clamped. Subsequently, a molten rubber material is injected into a cavity 21 defined by the inner end surfaces 11 a of the first hub 111 and the second hub 112 to perform molding. When cooled, the mold is unclamped, and a molded product is removed from the mold. This manufactures the coupling 10 that includes the rubber spacer 13 between the first hub 111 and the second hub 112.

As shown in Fig. 2, when the first claws 12a of the first hub 111 and the second claws 12b of the second hub 112 are located at equal intervals in the circumferential direction, the rubber spacer 13 is located in the cavity 21 defined by the opposing inner end surfaces 11a of the first hub 111 and the second hub 112. In a cross-section orthogonal to the axis x of the first hub 111 and the second hub 112, it is preferred that a cross-sectional area of the rubber spacer 13 between the inner circumference of the claws 12 and the outer circumference of the claws 12 be 20% to 50% of a combined cross-sectional area of the claws 12 and the rubber spacer 13 between the inner circumference of the claws 12 and the outer circumference of the claws 12. When the cross-sectional area of the rubber spacer 13 between the inner circumference of the claws 12 and the outer circumference of the claws 12 is in the above range, the rubber spacer 13 limits oscillations and increases the square root K^{1/2} of the dynamic torsional spring constant K further easily.

For example, when the outer diameter of the coupling 10 (rubber spacer 13) is 25 mm, and the diameter of the through hole 15 of the rubber spacer 13 is 5 mm, the proportion of the cross-sectional area of the claws 12 may be 53%. In other words, the proportion of the cross-sectional area of the rubber spacer 13 may be 47%. When the outer diameter of the coupling 10 is 25 mm, and the diameter of the through hole 15 of the rubber spacer 13 is 12 mm, the proportion of the cross-sectional area of the claws 12 may be 61%. In other words, the proportion of the cross-sectional area of the rubber spacer 13 may be 39%.

To increase the resonance frequency of the coupling 10, it is preferred that the square root K^{1/2} of the dynamic torsional spring constant K of the coupling 10 be 12.2 to 58.3. When K^{1/2} is in the above range, a sufficient gain may be easily obtained.

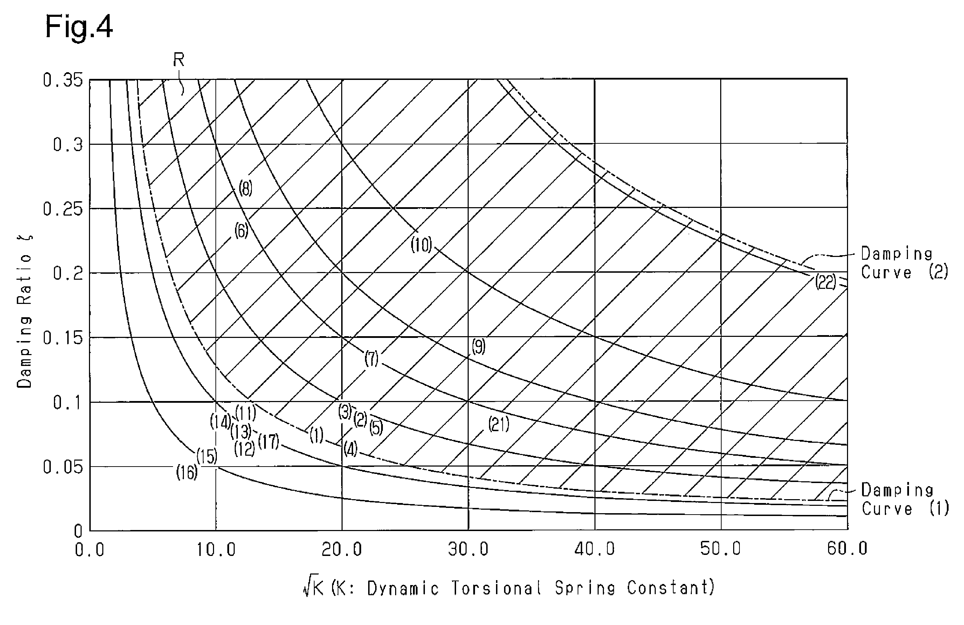

As shown in Fig. 4, in the rubber spacer 13, the relationship between the square root K^{1/2} of the dynamic torsional spring constant K and the damping ratio ζ is expressed by damping curves. When K^{1/2} is small, the damping ratio ζ is large. As K^{1/2} increases, ζ gradually decreases. In the rubber spacer 13 of the first embodiment, the product of ζ and K^{1/2} is set to be 1.3 to 12.0. Preferably, the product of ζ and K^{1/2} is set to be 2.5 to 12.0.

More specifically, as shown in Fig. 4 by the single-dashed lines, damping curve (1) shows when the product of ζ and K^{1/2} is 1.3. Also, as shown in Fig. 4 by the double-dashed lines, damping curve (2) shows when the product of ζ and K^{1/2} is 12.0. Thus, the range in which the product of the damping ratio ζ and the square root K^{1/2} of the dynamic torsional spring constant K is 1.3 to 12.0 is shown in Fig. 4 by region R, which is indicated by oblique lines (hatching) between damping curve (1) and damping curve (2).

When the product of ζ and K^{1/2} is less than 1.3, the amplitude of oscillations may be limited, and the settling time may be shortened. However, in this case, a sufficient gain cannot be obtained, and the responsiveness of the driven side to the driving side is adversely affected. When the product of ζ and K^{1/2} exceeds 12.0, the gain may be increased. However, in this case, the diameter of the coupling 10 becomes greater than 40 mm, which limits the range of use for the coupling 10 and is thus inappropriate.

The outer diameter of the coupling 10 affects the multiplied value of ζ and K^{1/2}. Preferably, the outer diameter of the coupling 10 is in a range of 15 to 40 mm. When the outer diameter of the coupling 10 is in the above range, a sufficient gain may be obtained while ensuring a wide range of use for the coupling 10.

The operation of the coupling 10, which is configured in the above manner, will now be described.

When the driving-side rotation shaft 16 and the driven-side rotation shaft 17 are connected to the coupling 10, the driving side rotation shaft 16 of a servomotor or the like transmits torque to the driven-side rotation shaft 17 through the coupling 10. The product of the damping ratio ζ and the square root K^{1/2} of the dynamic torsional spring constant K of the coupling 10 is set in the range of 1.3 to 12.0. As shown in Fig. 4, the relationship of ζ and K^{1/2} is expressed by the damping curves in which ζ is large when K^{1/2} is small, and decreases as K^{1/2} increases. Thus, when the product of ζ and K^{1/2} is set in the range defined by the region R shown in Fig. 4, each ζ and K^{1/2} may be set to be higher than that in the prior art. This improves the speed control gain and thus the responsiveness.

The first embodiment has the advantages described below.
(1) The gain, which indicates the responsiveness of the coupling 10, increases as the damping ratio ζ and the square root K^{1/2} of the dynamic torsional spring constant K increase. Thus, when the product of K^{1/2} and ζ is set to be 1.3 to 12.0, each K^{1/2} and ζ may be increased. This reduces hunting and improves the gain.

Further, the rubber spacer 13 balances the torsional rigidity and the damping ratio in a favorable manner. This improves the torque transmission performance.

Thus, the coupling 10 of the first embodiment has an advantage in that the speed control gain can be increased and the settling time can be shortened.
(2) The rubber spacer 13 is formed from a rubber material, the loss tangent δ of which is 0.2 to 1.3. Such a rubber material may easily absorb oscillation energy and the like. Thus, the amplitude of the oscillation may be reduced.
(3) In the cross-section orthogonal to the axis x of the first hub 111 and the second hub 112, the cross-sectional area of the rubber spacer 13 between the inner circumference and the outer circumference of the claws 12 is 20% to 50% of the combined cross-sectional area of the claws 12 and the rubber spacer 13 between the inner circumference and the outer circumference of the claws 12. This improves the gain while maintaining the torsional rigidity of the coupling 10.
(4) The damping ratio ζ of the coupling 10 is 0.07 to 0.27. This effectively limits the amplitude of the resonance frequency of the coupling 10.
(5) The square root K^{1/2} of the dynamic torsional spring constant K of the coupling 10 is 12.2 to 58.3. Thus, the coupling 10 has a sufficient torsional rigidity. Additionally, the coupling 10 may improve the gain and shorten the settling time by limiting hunting.

### Second Embodiment

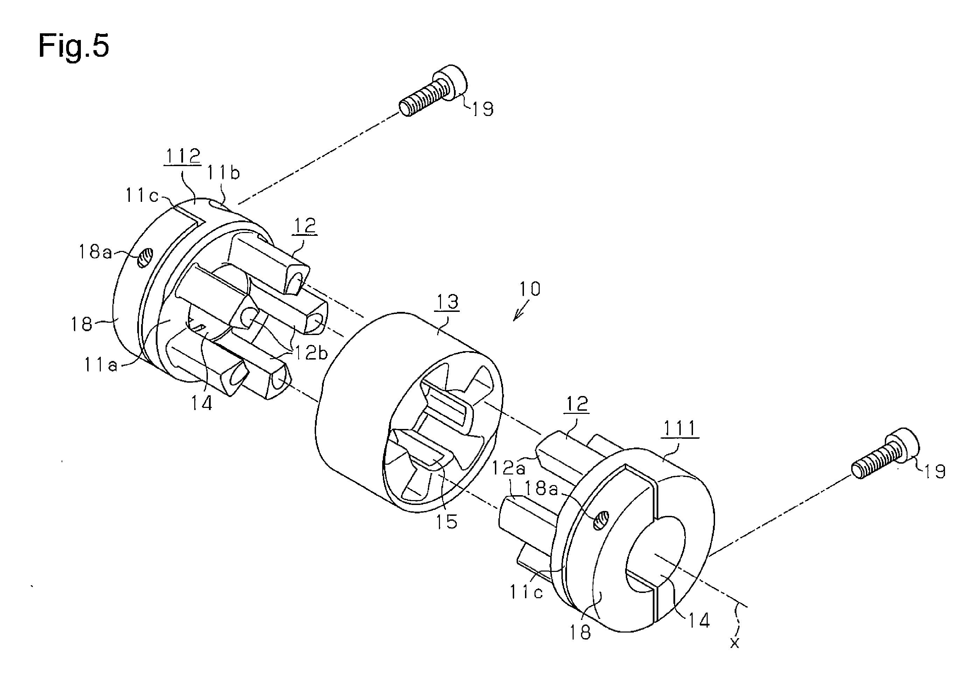

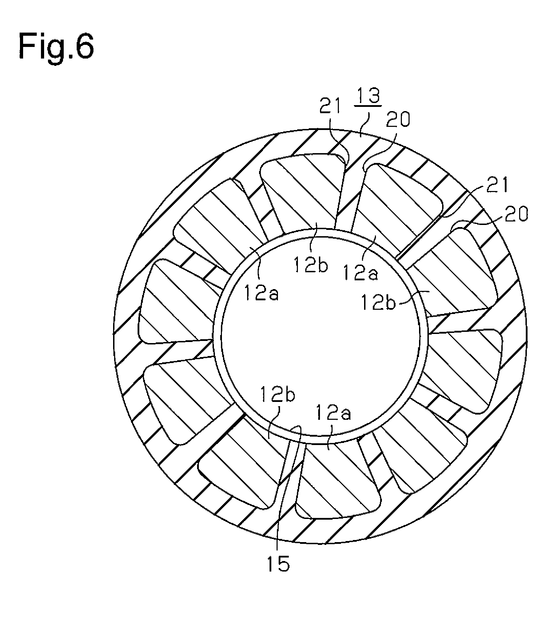

A second embodiment of the present invention will now be described with reference to Figs. 5 and 6. In the second embodiment, the description will focus on the differences from the first embodiment, and components that are the same will not be described.

As shown in Fig. 5, the inner end surfaces 11a of the first hub 111 and the second hub 112 respectively include five first claws 12a and five second claws 12b, which are used for coupling and arranged at equal intervals in the circumferential direction. The first claws 12a and the second claws 12b project in the direction of the axis x of the first hub 111 and the second hub 112. Each first claw 12a of the first hub 111 is positioned in a gap 20 between the two adjacent second claws 12b of the second hub 112 so that the five first claws 12a and the five second claws 12b are located at equal intervals in the circumferential direction. The rubber spacer 13 is located in the cavity 21 between the opposing inner end surfaces 11a of the first hub 111 and the second hub 112.

Referring to Fig. 6, when the outer diameters of the first hub 111 and the second hub 112 are each 25 mm, and the diameters of the insertion holes 14 of the first hub 111 and the second hub 112 are each 5 mm, the proportion of the cross-sectional area of the claws 12 may be 69%. In other words, the proportion of the cross-sectional area of the rubber spacer 13 may be 31%. When the outer diameters of the first hub 111 and the second hub 112 are each 25 mm, and the diameters of the insertion holes 14 of the first hub 111 and the second hub 112 are each 12 mm, the proportion of the cross-sectional area of the claws 12 may be 79%. In other words, the proportion of the cross-sectional area of the rubber spacer 13 may be 21%.

In the coupling 10 of the second embodiment, the first hub 111 and the second hub 112 include the five first claws 12a and the five second claws 12b, respectively. Thus, the proportion of the cross-sectional area of the rubber spacer 13 is smaller than that of the first embodiment. Therefore, the coupling 10 of the second embodiment has a higher torsional rigidity than the coupling 10 of the first embodiment and thus effectively limits the amplitude of oscillations. In this case, when torque is transmitted from the driving-side rotation shaft to the driven-side rotation shaft 17 through the coupling 10, the gain may be further increased and the settling time may be shortened compared to the first embodiment.

### Examples

The embodiments will now be described in further detail using examples and comparative examples.

### Examples 1 to 12 and Comparative Examples 1 to 7

In examples 1 to 10 and comparative examples 1 to 7, the outer diameter of the coupling 10 was 25 mm, and the rubber spacer 13 was formed from the rubber materials described below. In examples 11 and 12, the outer diameter of the coupling 10 was 39 mm, and the rubber spacer 13 was formed from the rubber materials described below.
Example 1: NBR-based rubber (loss tangent tan δ is 0.20, curve line (1) of Fig. 4)
Example 2: NR-based rubber (tan δ is 0.28, curve line (2) of Fig. 4)
Example 3: SBR-based rubber (tan δ is 0.26, curve line (3) of Fig. 4)
Example 4: BR-based rubber (tan δ is 0.21, curve line (4) of Fig. 4)
Example 5: CR-based rubber (tan δ is 0.28, curve line (5) of Fig. 4)
Example 6: fluorine-based rubber (tan δ is 0.50, curve line (6) of Fig. 4)
Example 7: fluorine-based rubber (tan δ is 0.48, curve line (7) of Fig. 4)
Example 8: HANENITE (registered trademark) manufactured by Naigai Rubber Industry Co., Ltd. (tan δ is 1.30, curve line (8) of Fig. 4)
Example 9: fluorine-based rubber (tan δ is 0.50, curve line (9) of Fig. 4)
Example 10: fluorine-based rubber (tan δ is 0.50, curve line (10) of Fig. 4)
Example 11: hydrogenated NBR-based rubber (tan δ is 0.20, curve line (21) of Fig. 4)
Example 12: fluorine-based rubber (tan δ is 0.50, curve line (22) of Fig. 4)
Comparative Example 1: NR-based rubber (tan δ is 0.21, curve line (11) of Fig. 4)
Comparative Example 2: SBR-based rubber (tan δ is 0.22, curve line (12) of Fig. 4)
Comparative Example 3: BR-based rubber (tan δ is 0.12, curve line (13) of Fig. 4)
Comparative Example 4: CR-based rubber (tan δ is 0.17, curve line (14) of Fig. 4)
Comparative Example 5: urethane-based rubber (tan δ is 0.08, curve line (15) of Fig. 4)
Comparative Example 6: silicone-based rubber (tan δ is 0.07, curve line (16) of Fig. 4)
Comparative Example 7: silicone-based rubber (tan δ is 0.18, curve line (17) of Fig. 4)

In examples 9, 10, and 12, the first hub 111 and the second hub 112 each included five claws. In the other examples and comparative examples, the first hub 111 and the second hub 112 each included three claws. The loss tangent tan δ of each rubber material was obtained by a dynamic viscoelasticity test at a temperature of 20°C and a frequency (oscillation) of 10 Hz.

Table 1 shows the loss tangents of the rubber materials (tan δ), the damping ratio ζ of each coupling 10, the square root K^{1/2} of the dynamic torsional spring constant K, and the product of the damping ratio ζ and the square root K^{1/2} of the dynamic torsional spring constant K.

In examples 1 to 12 and comparative examples 1 to 7, the driving-side rotation shaft 16 and the driven-side rotation shaft 17 were coupled to the coupling 10, which included the rubber spacer 13. Then, torque was transmitted from the driving-side rotation shaft 16, which was connected to a motor, to the driven-side rotation shaft 17. Operation conditions were set as described below. Under these operation conditions, the speed control gain (rad/s) and the settling time (ms) were measured in accordance with normal procedures.
Motor speed: 3000 (min⁻¹)
Time until the motor speed increases from 0 to 3000 (min⁻¹): 50 (ms)
Time until the motor speed decreases from 3000 to 0 (min⁻¹): 50 (ms)
Stroke of a work located on a driven-side ball screw: 100 (mm)
Load inertia moment ratio that shows the inertia ratio of the driven side to the driving side: 3.5 (times)

Additionally, oscillation was applied to an oscillation application point of the driving side using an impact hammer and analyzed with an FFT analyzer to determine the damping ratio ζ and the dynamic torsional spring constant K (Nm/rad). The results are shown in Table 1. Fig. 4 is a graph showing the relationship between the damping ratio ζ and the square root K^{1/2} of the dynamic torsional spring constant K.

**Table 1**

| | Loss tangent (tan δ) | Damping ratio (ζ) | K^{1/2} | ζ×K^{1/2} | Gain (rad/s) | Settling time (ms) |
|---|---|---|---|---|---|---|
| Example 1 | 0.20 | 0.072 | 18.2 | 1.3 | 2339 | 5 |
| Comparative Example 1 | 0.21 | 0.096 | 12.8 | 1.2 | 1462 | 12 |
| Example 2 | 0.28 | 0.086 | 21.4 | 1.8 | 1927 | 8 |
| Comparative Example 2 | 0.22 | 0.079 | 11.8 | 0.9 | 1462 | 10 |
| Example 3 | 0.26 | 0.093 | 20.2 | 1.9 | 2077 | 8 |
| Comparative Example 3 | 0.13 | 0.079 | 11.4 | 0.9 | 1023 | 12 |
| Example 4 | 0.21 | 0.064 | 20.5 | 1.3 | 1636 | 9 |
| Comparative Example 4 | 0.17 | 0.083 | 10.7 | 0.9 | 1636 | 6 |
| Example 5 | 0.27 | 0.086 | 21.7 | 1.9 | 2339 | 4 |
| Comparative Example 5 | 0.09 | 0.056 | 9.5 | 0.5 | 1299 | 9 |
| Comparative Example 6 | 0.07 | 0.049 | 8.1 | 0.4 | 635 | 63 |
| Comparative Example 7 | 0.18 | 0.070 | 14.3 | 1.0 | 1299 | 12 |
| Example 6 | 0.50 | 0.233 | 12.2 | 2.9 | 3688 | 2 |
| Example 7 | 0.48 | 0.133 | 22.4 | 3.0 | 3688 | 2 |
| Example 8 | 1.30 | 0.265 | 12.2 | 3.2 | 3688 | 2 |
| Example 9 | 0.50 | 0.142 | 30.8 | 4.4 | 3688 | 2 |
| Example 10 | 0.50 | 0.218 | 26.5 | 5.8 | 3688 | 2 |
| Example 11 | 0.20 | 0.083 | 32.4 | 2.7 | 3688 | 2 |
| Example 12 | 0.50 | 0.196 | 58.3 | 11.4 | 3688 | 2 |

As shown in Table 1, in examples 1 to 12, the product of ζ and K^{1/2} was in the range of 1.3 to 12.0. Thus, sufficiently high speed control gains of 1636 to 3688 (rad/s) and short settling times of 2 to 9 (ms) were obtained. In contrast, in comparative examples 1 to 7, ζ×K^{1/2} was less than 1.3. Thus, a sufficient gain could not be obtained. Additionally, the settling time tended to be long.

As shown in Fig. 4, the damping curves of examples 1 to 12 (curve lines (1) to (10), (21), and (22) of Fig. 4) are each located in the region R between the damping curve (1) and the damping curve (2). On the other hand, the damping curves of comparative examples 1 to 7 (curve lines (11) to (17) of Fig. 4) are all located outside the range of the region R between the damping curve (1) and the damping curve (2).

The embodiments may be modified as follows.

The first hub 111 and the second hub 112 may each include two, four, six or more claws 12.

In examples 1 to 12, the outer diameter of the coupling 10 (outer diameter of the rubber spacer 13) may be smaller than 25 mm or larger than 39 mm.

The length of the rubber spacer 13 in the direction of axis x may be modified by adjusting the length of the claws 12 of the first hub 111 and the second hub 112.

### DESCRIPTION OF REFERENCE CHARACTERS

10) coupling, 111) first hub, 112) second hub, 11a) inner end surface, 12) 12a) 12b) claw, 13) rubber spacer, 20) gap, 21) cavity, x) axis

## Claims

1. A coupling comprising:
a pair of hubs including a first hub and a second hub, wherein
the first hub includes a first inner end surface and a plurality of first claws located on the first inner end surface at intervals in a circumferential direction and projecting in an axial direction of the first hub,
adjacent ones of the plurality of first claws each form a first gap therebetween,
the second hub includes a second inner end surface and a plurality of second claws located on the second inner end surface at intervals in a circumferential direction and projecting in an axial direction of the second hub,
adjacent ones of the plurality of second claws each form a second gap therebetween,
the first inner end surface and the second inner end surface are opposed to each other,
each of the first claws is located in the second gap and each of the second claws is located in the first gap; and
a rubber spacer located between the first inner end surface and the second inner end surface,
wherein a product of a damping ratio (ζ) and a square root (K^{1/2}) of a dynamic torsional spring constant (K) of the coupling is 1.3 to 12.0.

2. The coupling according to claim 1, wherein the rubber spacer is formed from a rubber material having a loss tangent (tan δ) of 0.2 to 1.3.

3. The coupling according to claim 1 or 2, wherein in a cross-section orthogonal to the axis of the pair of hubs, a cross-sectional area of the rubber spacer between an inner circumference and an outer circumference of the first claws and the second claws is 20% to 50% of a combined cross-sectional area of the first claws, the second claws, and the rubber spacer between the inner circumference and the outer circumference of the first claws and the second claws.

4. The coupling according to any one of claims 1 to 3, wherein the damping ratio (ζ) is 0.07 to 0.27.

5. The coupling according to any one of claims 1 to 4, wherein the square root (K^{1/2}) of the dynamic torsional spring constant (K) is 12.2 to 58.3.
